# FASCICULE DE BREVET EUROPEEN

(11) **EP 3 843 185 B1**
(45) Date de publication et mention de la délivrance du brevet: **09.11.2022**
(21) Numéro de dépôt: 20216248.3
(22) Date de dépôt: 21.12.2020
(51) Int. Cl.: H01M 4/88, C25B 1/04, C25B 11/00, H01M 8/0271, H01M 8/0297, C25B 9/23, C25B 9/73

(54) **PROCÉDÉ ET DISPOSITIF DE FABRICATION D'UN ASSEMBLAGE MEMBRANE - COUCHES ACTIVES D'UNE PILE À COMBUSTIBLE OU D'UN ÉLECTROLYSEUR**
VERFAHREN UND VORRICHTUNG ZUR HERSTELLUNG EINER MEMBRANANORDNUNG MIT AKTIVSCHICHTEN EINER BRENNSTOFFZELLE ODER EINES ELEKTROLYSEGERÄTS
METHOD AND DEVICE FOR MANUFACTURING AN ACTIVE LAYER MEMBRANE ASSEMBLY OF A FUEL CELL OR AN ELECTROLYSER

(30) Priorité: 23.12.2019 FR 1915496
(43) Date de publication de la demande: 30.06.2021
(73) Titulaire: Commissariat à l'Energie Atomique et aux Energies Alternatives, 75015 Paris (FR)
(72) Inventeur: TOUDRET, Pierre, 38054 GRENOBLE cedex 09 (FR); BLACHOT, Jean François, 38054 GRENOBLE cedex 09 (FR); HEITZMANN, Marie, 38054 GRENOBLE cedex 09 (FR); NAYOZE-COYNEL, Christine, 38054 GRENOBLE cedex 09 (FR)
(74) Mandataire: INNOV-GROUP

(56) Documents cités:
- EP-A1- 3 057 162
- FR-A1- 2 892 861
- JP-A- 2002 158 014
- US-A1- 2005 072 514

## Description

### DOMAINE TECHNIQUE

L'invention concerne le domaine technique des réacteurs électrochimiques à membrane échangeuse de protons tels que les piles à combustibles et les électrolyseurs.

Les piles à combustible et les électrolyseurs sont constitués du même type de réacteur électrochimique qui, dans le cas de la pile à combustible, produit de l'énergie électrique et de l'eau à partir de dioxygène et de dihydrogène, ou qui, dans le cas de l'électrolyseur, produit du dioxygène et du dihydrogène à partir d'eau et d'énergie électrique.

Le réacteur électrochimique constituant la pile à combustible ou l'électrolyseur comporte généralement un élément central d'échange constitué d'un assemblage membrane-électrode (MEA, « Membrane Electrode Assembly », en anglais). Cet assemblage membrane-électrode comprend :
- une membrane centrale échangeuse de protons disposée entre deux couches actives catalytiques qui forment l'anode et la cathode du réacteur, selon un assemblage dénommé « assemblage membrane - couches actives », (CCM, « Catalyst Coated Membrane », en anglais) ;
- des couches de diffusion des gaz (GDL, « Gaz Diffusion Layer », en anglais), qui permettent de distribuer les fluides en contact avec l'anode et la cathode.

Le CCM, l'assemblage membrane - couches actives, est l'assemblage de la membrane échangeuse de proton et des couches actives permettant les réactions d'oxydoréduction. Dans le domaine des piles à combustible et des électrolyseurs, d'importantes recherches sont actuellement menées sur l'assemblage membrane-électrode. Cet élément est au cœur du fonctionnement du réacteur électrochimique, et son cout élevé ainsi que son procédé de fabrication difficilement industrialisable freinent le développement des piles à combustibles et des électrolyseurs alors que ces éléments seront essentiels dans la chaine de distribution de l'énergie dans le futur. L'invention vise plus particulièrement, la fabrication de l'assemblage membrane - couches actives qui nécessite de transférer les couches actives sur la membrane échangeuse de protons.

### ART ANTÉRIEUR

La demande de brevet WO2007124011 décrit un procédé de fabrication par transfert d'un assemblage membrane - couches actives de pile à combustible / électrolyseur, ce procédé comportant les étapes suivantes :
- une étape de dépôt d'une couche active catalytique sur un substrat de transfert ;
- une étape de transfert de la couche active catalytique du substrat de transfert vers une membrane échangeuse de protons par pressage.

### EXPOSÉ DE L'INVENTION

L'invention a pour but d'améliorer les procédés et dispositifs de fabrication de l'art antérieur.

À cet effet, l'invention vise un procédé de fabrication par transfert d'un assemblage membrane - couches actives de pile à combustible / électrolyseur, ce procédé comportant les étapes suivantes :
- une étape de dépôt d'une couche active catalytique sur un substrat de transfert ;
- une étape de transfert de la couche active catalytique du substrat de transfert vers une membrane échangeuse de protons par pressage.

Dans ce procédé, l'étape de transfert comporte une opération de pressage dans laquelle le substrat de transfert est pressé contre la membrane échangeuse de protons par l'intermédiaire d'un film de compression élastiquement déformable qui comporte une couche de matériau plein et une couche texturée.

Un autre objet de l'invention vise un dispositif de fabrication par transfert d'un assemblage membrane - couches actives de pile à combustible / électrolyseur, ce dispositif comportant un film de compression élastiquement déformable adapté à presser un substrat de transfert contre une membrane échangeuse de protons, ce film de compression comportant une couche de matériau plein et une couche texturée.

Le procédé et le dispositif selon l'invention permettent d'améliorer le transfert de la couche active catalytique du substrat de transfert vers la membrane échangeuse de protons, permettant ainsi la production d'un assemblage membrane - couches actives plus performant.

Le procédé et le dispositif selon l'invention permettent également d'améliorer la répétabilité du procédé de fabrication, ce qui permet une production de piles à combustible ou d'électrolyseurs conforme aux standards de l'industrie, c'est-à-dire conforme aux normes de qualité et au faible coût nécessaires pour une production à échelle industrielle. La répétabilité du procédé garantit notamment une production avec une faible proportion de pièces non conformes, ce qui n'est pas le cas des procédés de l'art antérieur qui sont essentiellement des procédés de laboratoire nécessitant des équipements coûteux et sensibles aux réglages.

Les inventeurs ont en effet constaté que l'utilisation du film de compression décrit, lors de l'étape de transfert, permet à la fois une homogénéisation des contraintes sur toute la surface du substrat de transfert, et une optimisation de la pression améliorant le transfert, grâce à la présence et au comportement du film de compression résultant de ses propriétés élastiques et de sa constitution en une ou plusieurs couches qui éventuellement peuvent travailler différemment, c'est-à-dire transmettre différemment les contraintes mécaniques et les déformations associées.

Plusieurs travaux expérimentaux récents ont démontré un lien entre la compression appliquée sur les couches actives catalytiques et la porosité ainsi que la structure de ces dernières. Par example : « Compressive behaviour of thin catalyst layers. Part I - Experimental study », Ali Malekian et al., International Journal of Hydrogen Energy, Volume 44, Issue 33, 5 July 2019, Pages 18450-18460 ; « Compressive behaviour of thin catalyst layers. Part II - Model development and validation », Ali Malekian et al., International Journal of Hydrogen Energy, Volume 44, Issue 33, 5 July 2019, Pages 18461-18471 ; « Effect of compression on pore size distribution and porosity of PEM fuel cell catalyst layers », Ali Malekian et al., International Journal of Hydrogen Energy, Volume 44, Issue 41, 30 August 2019, Pages 23396-23405. Les inventeurs ont quant à eux déterminé l'importance du contrôle des contraintes lors du transfert d'une couche active d'un substrat vers la membrane échangeuse de protons. En effet, lors du transfert, la couche active peut subir des surcontraintes locales si la répartition des efforts est mal maitrisée. Les couches actives sont des couches fonctionnelles dont les propriétés dépendent notamment de la structure poreuse, et une contrainte locale trop importante risque de les dégrader. Les inventeurs ont déterminé que le contrôle de la répartition des contraintes lors du transfert est un élément essentiel pour garantir la production d'un assemblage membrane - couches actives de manière fiable et répétable.

En plus de l'homogénéisation des contraintes, le film de compression permet de compenser des différences de planéité ou d'épaisseur dans le montage de transfert, ce qui permet l'utilisation de matériel de production standard.

Selon un mode de réalisation, le film de compression comporte une couche de matériau plein et une couche texturée. La couche texturée du film de compression peut être homogène sur toute la surface du film de compression, ce qui permet un transfert direct et homogène de l'ensemble de la couche active. Selon un mode de réalisation alternatif, la couche de matériau texturé comporte au contraire différentes zones dont la densité de texture est différente. La présence de zones de différentes densité de texture sur la surface du film de compression permet de moduler l'effort de transfert en appliquant des contraintes plus importantes sur certaines zones que sur d'autres. Il est ainsi possible de moduler le transfert de la couche active catalytique en fonction de zones définies pour la surface de la membrane échangeuse de protons. Des motifs particuliers de couche active catalytique peuvent être réalisés sur la membrane, ou la présence de couche active catalytique peut être restreinte à certaines zones de la membrane. Même avec ces différentes zones, la contrainte de transfert est homogène au sein de chacune des zones.

Le transfert de la couche active sur la membrane est amélioré même en utilisant des couches actives moins homogènes en épaisseur et en structure, ainsi qu'en utilisant des équipements de production standard qui n'ont pas la possibilité de contrôler finement la répartition des contraintes appliquées lors de l'étape de transfert.

La possibilité de moduler le nombre de couches et la texture de ces couches au sein du film de compression permet le transfert de la couche active sous forme de motifs ce qui entraine des économies de matière en ne déposant que les parties de couche active qui sont nécessaires. Cela permet également de faire des assemblages membrane - couches actives présentant une forme particulière, avec le même équipement de production.

Le film de compression élastiquement déformable permet une déformation en compression lors de l'étape de transfert à chaud et permet de faibles déformations élastiques dans les directions perpendiculaires à cette direction de pressage, ce qui évite les mouvements perpendiculaires à la direction de pressage de la couche active catalytique et de la membrane, ces dernières subissant ainsi des efforts qui sont essentiellement orientés dans la direction de pressage. De plus, et surtout, le film de compression limite le cisaillement de la membrane dû à la compression. Pour ce faire, le matériau du film de compression peut être adapté en ajoutant une trame, des renforts ou une texturation. Pour limiter ce cisaillement de la membrane, il est également possible de jouer sur l'environnement mécanique en ajoutant un système de blocage physique du film de compression, par exemple, un moule ou des rouleaux presseurs muni de bords latéraux.

Le procédé de fabrication selon l'invention peut comporter les caractéristiques additionnelles suivantes, seules ou en combinaison :
- l'opération de pressage est réalisée par un élément de moule qui presse le film de compression contre le substrat de transfert ;
- l'opération de pressage est réalisée en continu entre deux rouleaux presseurs qui pressent le film de compression contre le substrat de transfert ;
- une couche antiadhérente est disposée entre le film de compression et le substrat de transfert ;
- durant l'opération de pressage, la couche de matériau plein du film de compression est tournée vers le substrat de transfert et la couche active catalytique du substrat de transfert est tournée vers la membrane échangeuse de protons ;
- le pressage est réalisé directement sur la couche texturée du film de compression ;
- la couche texturée du film de compression comporte des motifs définis par des parois saillantes dans la direction de pressage ;
- les motifs de la couche texturée sont régulièrement répartis sur toute la surface du film de compression ;
- la couche texturée présente une pluralité de motifs différents définissant différentes zones sur la surface du film de compression ;
- l'opération de pressage comprend simultanément le pressage d'un cadre de renfort sur le pourtour de la membrane échangeuse de protons ;
- une couche de matériau du film de compression présente : une première surface de pressage du substrat de transfert ; et une deuxième surface de pressage du cadre de renfort, la deuxième surface étant située sur un plan différent du plan de la première surface ;
- durant l'étape de pressage, le film de compression est maintenu entre deux bords latéraux ;
- ledit substrat de transfert est pressé contre une face de la membrane échangeuse de protons par l'intermédiaire du film de compression, et un deuxième substrat de transfert muni d'une couche active catalytique est pressé contre l'autre face de la membrane échangeuse de protons par l'intermédiaire d'un deuxième film de compression élastiquement déformable.

Le dispositif de fabrication selon l'invention peut comporter les caractéristiques additionnelles suivantes, seules ou en combinaison :
- le dispositif comporte un élément de moule disposé contre le film de compression et adapté à presser le film de compression contre un substrat de transfert ;
- le dispositif comporte deux éléments de moule et deux films de compression, chaque élément de moule étant disposé contre l'un des films de compression ;
- le dispositif comporte des rouleaux presseurs adaptés à presser le film de compression contre un substrat de transfert ;
- le dispositif comporte des bords latéraux adaptés à maintenir entre eux le film de compression ;
- le film de compression présente : une première surface de pressage de substrat de transfert ; et une deuxième surface de pressage de cadre de renfort ;
- la deuxième surface est située sur un plan différent du plan de la première surface.

### PRÉSENTATION DES FIGURES

D'autres caractéristiques et avantages de l'invention ressortiront de la description non limitative qui suit, en référence aux dessins annexés dans lesquels :
- La figure 1 représente schématiquement un dispositif de fabrication d'un assemblage membrane - couches actives selon l'invention ;
- La figure 2 est une vue agrandie d'un film de compression de la figure 1 ;
- La figure 3 est une vue schématique de dessus d'un film de compression de la figure 1 ;
- La figure 4 est une vue schématique similaire à la figure 3 pour une variante de réalisation ;
- La figure 5 illustre un deuxième mode de réalisation du dispositif de fabrication selon l'invention ;
- La figure 6 est une vue de profil au microscope d'une couche active catalytique avant compression ;
- La figure 7 est une vue similaire à la figure 6 pour une couche active catalytique après compression ;
- La figure 8 illustre une variante de réalisation du dispositif de fabrication selon l'invention.

### DESCRIPTION DÉTAILLÉE

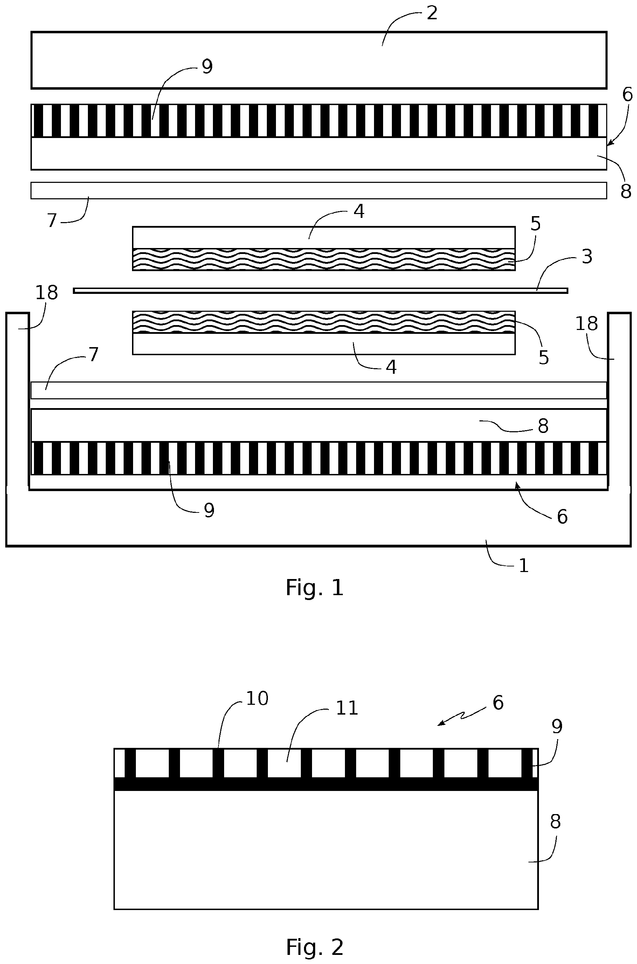

La figure 1 illustre schématiquement un dispositif de fabrication selon l'invention, vu de profil, en coupe. Ce dispositif de fabrication permet de réaliser un assemblage membrane - couches actives pour piles à combustible ou électrolyseurs grâce à un procédé de transfert, dans lequel des couches actives catalytiques sont transférées par pressage à chaud depuis un substrat de transfert directement sur une membrane échangeuse de protons.

Cette figure 1, ainsi que les autres figures, sont des illustrations rendant compte de la disposition des différents éléments en exagérant leur épaisseur. Notamment, les proportions d'épaisseurs ne correspondent pas à la réalité.

Le dispositif comporte une embase de moule 1 et un couvercle de moule 2, entre lesquels sont disposés les éléments destinés à subir une opération de pressage à chaud. Ces éléments de moule 1, 2 sont par exemple montés dans une presse.

Lors de la fabrication d'un assemblage membrane - couches actives, une membrane échangeuse de protons 3 est disposée au centre, entre les éléments de moule 1,2. Cette membrane échangeuse de protons 3 est une membrane classique pour piles à combustible et électrolyseurs, destinée à former une paroi de séparation des compartiments anodique et cathodique en permettant le passage des protons. Cette membrane, est couramment dénommée en anglais « Proton Exchange Membrane » (PEM), ou « Polymer Electrolyte Membrane ». La constitution de ces membranes est connue de l'homme du métier et des exemples de telles membranes sont notamment décrits dans le document WO2007124011.

Le montage de pressage à chaud comporte de plus deux substrats de transfert 4, disposés de part et d'autre de la membrane 3. Chaque substrat 4 est muni sur l'une de ses faces d'une couche active catalytique 5. Les couches actives 5 des substrats 4 sont tournées vers la membrane 3 en vue d'y être transférés.

Les couches actives catalytiques 5 sont destinées à former l'anode et la cathode de part et d'autre de la membrane 3 sur l'assemblage membrane - couches actives finalisé. La constitution de ces couches actives catalytiques est connue de l'homme du métier et des exemples sont notamment décrits dans le document WO2007124011.

Deux films de compression 6 sont également disposés de part et d'autre des substrats de transfert 4.

Entre chaque film de compression 6 et le substrat 4 correspondant, il est possible de prévoir une couche antiadhérente optionnelle qui permet d'améliorer le décollement de ces deux éléments en fin de procédé et permet également de protéger la membrane 3 en évitant le contact direct du film de compression 6 avec la membrane 3. Cette couche antiadhérente 7 est par exemple constituée de polymère fluoré (PTFE, FEP, par exemple), ou de Kapton. La couche antiadhérente 7 est de préférence suffisamment fine et souple pour être pelable et pour ne pas empêcher l'homogénéisation des contraintes par le film de compression. Dans le présent exemple, la couche antiadhérente est une couche de PTFE de 50 µm d'épaisseur.

Dans le présent exemple, chacun des films de compression 6 comporte une première couche de matériau plein 8 et une deuxième couche de matériau texturé 9. L'exemple illustratif décrit en référence aux figures 1 à 5 vise ainsi un film de compression 6 à deux couches, étant entendu que, en variante, le film de compression 6 peut ne comporter qu'une seule couche de matériau élastiquement déformable.

La couche de matériau plein 8 de chaque film de compression 6 est tournée vers le substrat de transfert 4 correspondant, tandis que la couche texturée 9 est tournée vers les éléments de moule 1, 2.

Dans le présent exemple, le film de compression 6 est entièrement réalisé en silicone et présente une épaisseur totale de 1,5 millimètre. Dans le cas de la variante visant un film de compression à une seule couche, ce dernier peut être constitué d'une couche de silicone unique de, par exemple, 1,5 mm d'épaisseur.

La figure 2 est un exemple illustrant l'un des films de compression 6 de la figure 1, et représente une portion agrandie de ce film 6, vue en section.

La couche de matériau plein 8 est, dans l'exemple illustré de film 6 à deux couches, une couche de silicone de 1,2 millimètre d'épaisseur, et est par conséquent élastiquement déformable. L'expression « matériau plein » signifie que cette couche est réalisée d'une seule pièce, dans la masse, à partir d'un seul matériau. La couche de matériau plein est prévue pour fournir un comportement mécanique homogène correspondant aux propriétés mécaniques du matériau la constituant. La couche de matériau plein 8 est dépourvue de motifs ou ouvertures. La couche de matériau plein 8 est ainsi homogène sur toute son épaisseur et sur toute sa surface. Dans le cas de la variante de film de compression à une seule couche, le film de compression peut être constitué d'une unique couche identique à cette couche de matériau plein 8.

La couche texturée 9 est, dans le présent exemple, également constituée de silicone. Cependant, à la différence de la couche de matériau plein 8, la couche texturée 9 présente des motifs réalisés par des parois saillantes 10, s'étendant transversalement, c'est-à-dire dans la direction de l'épaisseur du film de compression 6. Cette direction d'épaisseur dans laquelle s'étendent les parois saillantes 10 correspond à la direction de pressage, c'est-à-dire à la direction dans laquelle les éléments de moules 1,2 sont rapprochés l'un de l'autre en vue de presser les deux substrats de transfert 4 contre la membrane 3.

La couche texturée 9 comporte ainsi des cavités 11 régulièrement réparties sur sa surface à la faveur des motifs décrits par les parois saillantes 10.

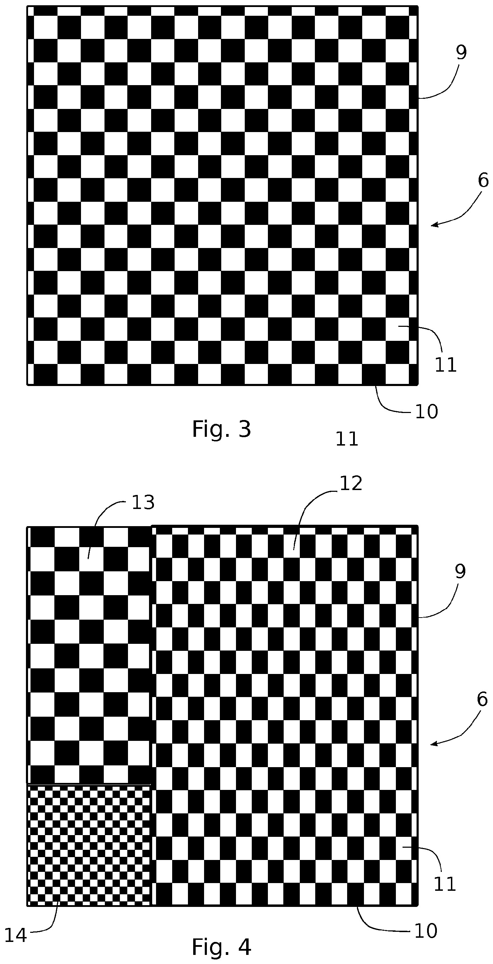

La figure 3 illustre un exemple de motifs qui peuvent être constitués par les parois saillantes 10. Dans cet exemple, la couche 9 est texturée par un motif gaufré entrecroisé dont les mailles sont formées par les parois saillantes 10. Les cavités 11, quant à elles, forment des alvéoles au sein du motif. Ces cavités 11 peuvent traverser ou non l'épaisseur du film 9.

Au-delà de cet exemple illustré, tout autre motif de texture peut être envisagé pour l'agencement les parois saillantes 10 telles que des motifs géométriques répétés sur toute la couche texturée 9, par exemple des carrés, des rectangles, des triangles, des cylindres ou tout autre forme.

Ainsi, en variante, la couche texturée 9 est par exemple réalisée par des carrés de 1 millimètre de côté (constituant les cavités 11), découpés dans l'épaisseur de la couche texturée 9 et séparés par des parois saillantes 10 de 0,75 millimètre de large, ces carrés étant répartis en quinconce. Le film de compression 6 est dans cet exemple un carré dont le côté mesure 10 centimètres, dimension correspondant à celle des éléments de moule 1, 2 qui sont ajustés au film de compression 6.

La figure 3 illustre un exemple de film de compression 6 dont la répartition des motifs de texture est homogène sur toute sa surface, c'est-à-dire que la couche texturée 9 présente un motif se répétant à l'identique sur toute sa surface.

En variante, la figure 4 illustre schématiquement un exemple où des motifs similaires à celui de la figure 3, mais de densités différentes, sont agencés sur la surface de la couche texturée 9. La couche texturée 9 est agencée dans cet exemple selon trois zones 12, 13, 14 de différentes densités de motifs. Ces trois zones correspondent à trois zones de la surface du substrat de transfert pour lesquelles une pression différente sera recherchée lors de l'opération de pressage à chaud. En effet, la zone 14 du film de compression 6 dont la couche texturée 9 est la plus dense, fournira une pression de contact plus importante sur le substrat de transfert que par exemple la zone 13, dont la densité de la couche texturée 9 est moindre. Le transfert des couches actives 5 peut ainsi être modulé sur différentes zones de la membrane 3.

Le dispositif décrit aux figures 1 à 4 permet la mise en œuvre du procédé de fabrication selon l'invention, décrit ci-après.

Pour la fabrication d'un assemblage membrane - couches actives de pile à combustible ou d'électrolyseur, une première étape consiste à réaliser les ensembles formés d'un substrat de transfert 4 et d'une couche active 5. Pour cela, la couche active 5 est déposée, par exemple par impression, sur le substrat de transfert 4. Les matériaux du substrat de transfert 4, de la couche active 5 et les modes de dépôt de cette dernière sont connus de l'art antérieur et des exemples sont notamment décrits dans le document WO2007124011.

Le procédé de fabrication se poursuit par la mise en place dans les éléments de moule 1, 2 de: la membrane 3 ; les substrats 4 munis de la couche active 5 ; les films de compression 6 ; et les éventuelles couches antiadhérentes 7 ; selon l'agencement représenté à la figure 1.

Le moule est ensuite refermé et les éléments de moule 1, 2 sont pressés l'un en direction de l'autre durant une opération de pressage à chaud. Les films de compression 6 sont alors comprimés chacun contre le substrat 4 correspondant, ce qui entraine la compression de la couche active 5 correspondante contre une face de la membrane 3 pour réaliser le transfert de cette couche active 5 sur la membrane 3.

Le moule 1,2 est ensuite ouvert et les substrats de transfert 4 retirés. L'assemblage membrane - couches actives, constitué de la membrane 3 munie sur chacune de ses faces d'une couche active 5, est ainsi réalisé.

Les films de compression 6 peuvent ensuite être séparés de chaque substrat 4, ce qui permet éventuellement de réutiliser les films de compression 6 pour la production d'un nouvel assemblage membrane - couches actives dans le cadre d'une production industrielle.

Durant l'opération de pressage à chaud, les films de compression 6 ont de préférence leur contour bloqué aux extrémités du moule par les bords latéraux 18 de ce dernier. De cette manière, les déplacements dus aux cisaillements entrainés par le pressage à chaud sont limités. Ce montage garantit une homogénéité des contraintes sur toute la surface du substrat de transfert 4. Il n'est pas nécessaire que le substrat 4 et le film de compression 6 correspondant aient la même taille pour qu'une homogénéité de la contrainte appliquée sur la surface du substrat 4 soit obtenue (ou sur les différentes zones dans le cas de différentes densités de texture).

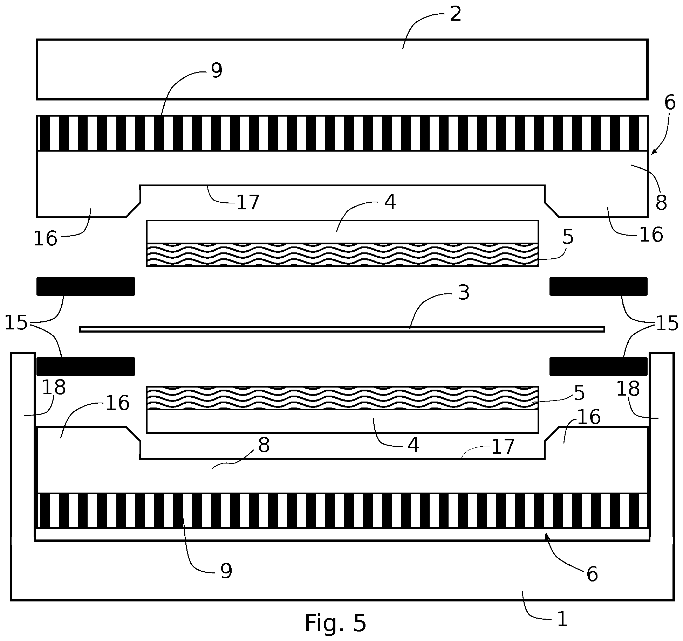

La figure 5 illustre un mode de réalisation particulièrement avantageux dans lequel le film de compression 6 présente une couche de matériau plein 8 dont la forme est adaptée à la compression d'éléments supplémentaires sur la membrane 3. Selon ce mode de réalisation, l'opération de pressage à chaud réalise deux actions en une seule opération : le transfert des couches actives 5 sur la membrane 3 ; et la fixation d'un ou plusieurs cadres de renfort 15 sur le pourtour de la membrane 3. L'exemple illustré à la figure 5 met en œuvre un film de compression à deux couches identique à celui des figures 1 à 4, étant entendu que ce mode de réalisation de la figure 5 peut être également mis en œuvre avec un film de compression comprenant un autre nombre de couches et notamment avec une seule couche de matériau élastiquement déformable.

Pour réaliser à la fois le transfert des couches actives 5 sur la membrane 3 et la fixation d'un ou plusieurs cadres de renfort 15 sur le pourtour de la membrane 3, la couche de matériau plein 8 présente une deuxième surface de pressage 16 proéminente. La couche de matériau plein 8 comporte ainsi une première surface de pressage 17 qui est destinée au contact avec le substrat 4 et une deuxième surface de pressage 16 qui est destinée à venir presser les cadres de renfort 15. La deuxième surface de pressage 16 est située sur un plan différent du plan de la première surface 17, plus proche de la membrane 3. En variante, l'épaisseur du film de compression 6, qu'il soit constitué d'une seule couche ou de plusieurs, peut être choisie pour que ses propriétés élastiques permettent à la fois le transfert des couches actives 5 et la fixation des cadres de renfort 15 avec une première surface de pressage 17 et une deuxième surface de pressage 16 qui sont situées dans un même plan.

Les cadres de renfort 15 sont par exemple réalisés en PEN (Polyéthylène naphtalate) ou PET (Polyéthylène téréphtalate), et peuvent être adhésivés.

Durant l'opération de pressage à chaud, en plus de comprimer les substrats 4 contre la membrane 3, les films de compression 6 permettent également de comprimer les cadres de renfort 15 et de les fixer sur la membrane 3.

À l'ouverture du moule, l'assemblage membrane - couches actives est ainsi produit et directement muni d'un cadre de renfort 15 en une seule opération. Le film de compression 6 permet cette fixation du cadre de renfort 15 dans la même opération que le pressage des couches actives 5 contre la membrane 3, grâce à ses propriétés de répartition des contraintes dues à la double couche 8, 9 (ou, en variante, à une couche unique) sans avoir à craindre un cisaillement ou une déchirure de la membrane 3 liée aux zones d'interface entre les couches actives 5 et les cadres de renfort 15.

Les propriétés de répartition des contraintes du film de compression 6 peuvent être modulées en variant l'épaisseur de la couche pleine 8 (ou de la couche unique si le film de compression 6 ne comporte qu'une couche) ou/et à un changement de texturation de la couche texturée 9.

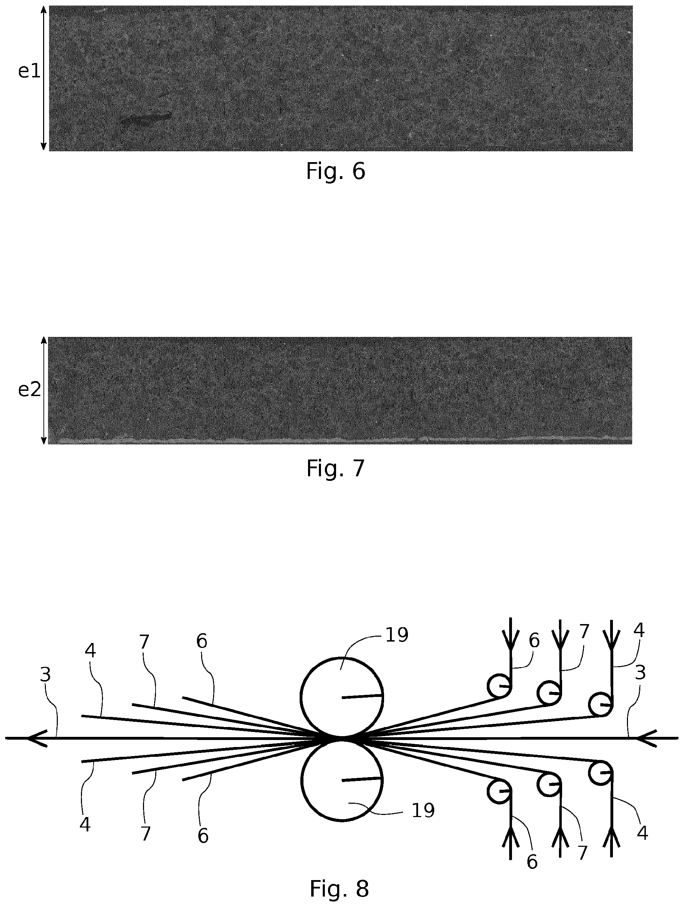

Le film de compression 6 conforme à la réalisation en deux couches décrites précédemment, ou conforme à sa variante de réalisation en une seule couche, permet une répartition des contraintes de pressage sur le substrat de transfert 4 et donc sur la couche active 5. Les inventeurs ont déterminé expérimentalement qu'une compression locale de la couche active peut conduire à une perte d'épaisseur de cette dernière allant jusqu'à 25 µm sous une pression de 10 MPa à 160°. Les figures 6 et 7 illustrent ce fait en montrant la tranche d'une couche active 5 vue au microscope électronique à balayage. Sur la figure 6, la couche active 5 est représentée avant compression et son épaisseur e1, dans cet exemple, est de 90 µm. La figure 7 représente la couche active 5 de la figure 6 après que cette dernière ait subi une compression de 10 MPa correspondant à une absence de répartition de la contrainte exercée sur le substrat de transfert 4 (dans le cas où le film de compression n'est pas utilisé). Ces 10Mpa correspondent à la contrainte qu'il est possible de trouver localement dans l'assemblage membrane - couches actives, due à la non répartition des contraintes par un film de compression. En effet, les contraintes nominales de compression ne dépassent généralement pas quelques Mpa, mais une surcontrainte atteignant 10MPa peut être rapidement atteinte, en l'absence de film de compression, avec un simple défaut de planéité de l'outil. Sur la zone illustrée à la figure 7, la couche active 5 présente une épaisseur e2 de 65 µm, soit une perte de 25 µm due à cette compression locale. Cette perte d'épaisseur, qui est empêchée par l'utilisation du film de compression 6, entraine également une perte de porosité qui dégrade les performances de l'assemblage membrane - couches actives.

Grâce à l'utilisation du film de compression 6, le transfert des couches actives 5 est réalisé en conservant une part importante de leur structure initiale (porosité, morphologie, répartition). L'impact des surcontraintes locales modifiant cette structure est ainsi limité.

Des variantes de réalisation du dispositif ou du procédé décrit précédemment peuvent être mises en œuvre sans sortir du cadre de l'invention. Par exemple, le film de compression 6 peut comporter un nombre quelconque de couches de matériau déformable, pleines ou texturées, par exemple une seule couche ou trois couches.

Dans le cas du film de compression à deux couches décrit précédemment, ce film de compression 6 peut être réalisé par tout autre moyen permettant l'association d'une couche de matériau plein 8 et d'une couche texturée 9, par exemple un tissu enduit de silicone, l'utilisation d'autres matériaux élastiquement déformables, un mât ou un tissu de carbone contenant du PTFE peut également constituer la couche texturée ou non texturée, ainsi que du papier tissé ou du caoutchouc. Le film de compression 6 a de préférence une épaisseur comprise entre 0,5 millimètre et 3 centimètres. Le film de compression peut aussi être un film plein sans texturation, ou un multicouche sans texturation. Par exemple on peut utiliser simplement un mat, un feutre, ou un tissu de carbone avec PTFE tel quel, sans texturation.

Par ailleurs, les exemples décrits concernent le pressage de deux substrats de transfert munis de leurs couches actives contre les deux faces d'une membrane, cependant, il est possible en variante de ne déposer qu'une seule couche active sur une face de la membrane avec un seul substrat de transfert et un seul ou deux films de compression.

Par ailleurs, l'exemple décrit précédemment vise la fabrication discontinue d'un assemblage membrane - couches actives à l'aide d'un moule. En variante, le procédé et le film de compression selon l'invention peuvent être mis en œuvre dans le cadre d'une production continue, conformément à l'exemple illustré schématiquement à la figure 8. Selon cet exemple, la membrane 3 est une bande défilant en continu et guidée par des rouleaux. Le film de compression 6 et le substrat de transfert 4, muni de sa couche active, sont également déroulés en continu et sont pressés contre la membrane 3 entre des rouleaux presseurs 19. Dans l'exemple illustré, deux substrats 4 sont pressés par deux rouleaux presseurs 19 par l'intermédiaire de deux films de compression 6, sur chaque face de la membrane 3. Une couche antiadhérente 7 peut être également prévue entre chaque substrat 4 et le film de compression 6 correspondant. Les rouleaux peuvent être chauffés et peuvent comporter, de plus, deux joues de blocage latéral (non visibles sur la vue de profil de la figure 6) formant des bords latéraux contre lesquels s'appuient les rebords du film de compression de sorte que le film de compression est maintenu entre les deux bords latéraux, ces derniers jouant le même rôle que les bords latéraux 18 du moule 1, 2.

En variante, il est aussi possible d'envisager que le film de compression 6 soit simplement collé sur les rouleaux presseurs 19.

## Revendications

1. Procédé de fabrication par transfert d'un assemblage membrane - couches actives de pile à combustible / électrolyseur, ce procédé comportant les étapes suivantes :
- une étape de dépôt d'une couche active catalytique (5) sur un substrat de transfert (4) ;
- une étape de transfert de la couche active catalytique (5) du substrat de transfert (4) vers une membrane échangeuse de protons (3) par pressage ;
**caractérisé en ce que** l'étape de transfert comporte une opération de pressage dans laquelle le substrat de transfert (4) est pressé contre la membrane échangeuse de protons (3) par l'intermédiaire d'un film de compression (6) élastiquement déformable qui comporte une couche de matériau plein (8) et une couche texturée (9).

2. Procédé selon la revendication 1, **caractérisé en ce que** l'opération de pressage est réalisée par un élément de moule (1,2) qui presse le film de compression (6) contre le substrat de transfert (4).

3. Procédé selon l'une des revendications 1 ou 2, **caractérisé en ce que** l'opération de pressage est réalisée en continu entre deux rouleaux presseurs (19) qui pressent le film de compression (6) contre le substrat de transfert (4).

4. Procédé selon l'une quelconque des revendications précédentes, **caractérisé en ce qu'**une couche antiadhérente (7) est disposée entre le film de compression (6) et le substrat de transfert (4).

5. Procédé selon l'une des revendications précédentes, **caractérisé en ce que**, durant l'opération de pressage, la couche de matériau plein (8) du film de compression (6) est tournée vers le substrat de transfert (4) et la couche active catalytique (5) du substrat de transfert (4) est tournée vers la membrane échangeuse de protons (3).

6. Procédé selon l'une des revendications précédentes, **caractérisé en ce que** le pressage est réalisé directement sur la couche texturée (9) du film de compression (6).

7. Procédé selon l'une des revendications précédentes, **caractérisé en ce que** la couche texturée (9) du film de compression (6) comporte des motifs définis par des parois saillantes (10) dans la direction de pressage.

8. Procédé selon la revendication 7, **caractérisé en ce que** les motifs de la couche texturée (9) sont régulièrement répartis sur toute la surface du film de compression (6).

9. Procédé selon la revendication 7, **caractérisé en ce que** la couche texturée (9) présente une pluralité de motifs différents définissant différentes zones sur la surface du film de compression (6).

10. Procédé selon l'une quelconque des revendications précédentes, **caractérisé en ce que** l'opération de pressage comprend simultanément le pressage d'un cadre de renfort (15) sur le pourtour de la membrane échangeuse de protons (3).

11. Procédé selon la revendication 10, **caractérisé en ce qu'**une couche de matériau du film de compression (6) présente : une première surface (17) de pressage du substrat de transfert (4) ; et une deuxième surface (16) de pressage du cadre de renfort (15), la deuxième surface (16) étant située sur un plan différent du plan de la première surface (17).

12. Procédé selon l'une quelconque des revendications précédentes, **caractérisé en ce que**, durant l'étape de pressage, le film de compression (6) est maintenu entre deux bords latéraux (18).

13. Procédé selon l'une quelconque des revendications précédentes, **caractérisé en ce que** ledit substrat de transfert (4) est pressé contre une face de la membrane échangeuse de protons (3) par l'intermédiaire du film de compression (6), et **en ce qu'**un deuxième substrat de transfert (4) muni d'une couche active catalytique (5) est pressé contre l'autre face de la membrane échangeuse de protons (3) par l'intermédiaire d'un deuxième film de compression (6) élastiquement déformable.

14. Dispositif de fabrication par transfert d'un assemblage membrane - couches actives de pile à combustible / électrolyseur, ce dispositif comportant un film de compression (6) élastiquement déformable adapté à presser un substrat de transfert (4) contre une membrane échangeuse de protons (3), ce film de compression (6) comportant une couche de matériau plein (8) et une couche texturée (9).

15. Dispositif selon la revendication 14, **caractérisé en ce qu'**il comporte un élément de moule (1,2) disposé contre le film de compression (6) et adapté à presser le film de compression (6) contre un substrat de transfert (4).

16. Dispositif selon la revendication 15, **caractérisé en ce qu'**il comporte deux éléments de moule (1,2) et deux films de compression (6), chaque élément de moule (1,2) étant disposé contre l'un des films de compression (6).

17. Dispositif selon la revendication 14, **caractérisé en ce qu'**il comporte des rouleaux presseurs (19) adaptés à presser le film de compression (6) contre un substrat de transfert (4).

18. Dispositif selon l'une des revendications 14 à 17, **caractérisé en ce qu'**il comporte des bords latéraux (18) adaptés à maintenir entre eux le film de compression (6).

19. Dispositif selon l'une des revendications 14 à 18, **caractérisé en ce que** le film de compression (6) présente: une première surface (17) de pressage de substrat de transfert ; et une deuxième surface (16) de pressage de cadre de renfort.

20. Dispositif selon la revendication 19, **caractérisé en ce que** la deuxième surface (16) est située sur un plan différent du plan de la première surface (17).

## Patentansprüche

1. Verfahren zur Herstellung durch Transfer einer Aktivschichten-Membrananordnung einer Brennstoffzelle/eines Elektrolyseurs, wobei dieses Verfahren die folgenden Schritte umfasst:
- einen Schritt des Abscheidens einer katalytischen Aktivschicht (5) auf einem Transfersubstrat (4);
- einen Schritt des Transfers der katalytischen Aktivschicht (5) des Transfersubstrats (4) zu einer Protonenaustauschmembran (3) durch Pressen;
**dadurch gekennzeichnet, dass** der Transferschritt einen Pressvorgang umfasst, bei dem das Transfersubstrat (4) über eine elastisch verformbare Druckfolie (6), die eine Schicht aus Vollmaterial (8) und eine texturierte Schicht (9) umfasst, gegen die Protonenaustauschmembran (3) gepresst wird.

2. Verfahren nach Anspruch 1, **dadurch gekennzeichnet, dass** der Pressvorgang mit einem Formelement (1, 2) ausgeführt wird, das die Druckfolie (6) gegen das Transfersubstrat (4) presst.

3. Verfahren nach einem der Ansprüche 1 oder 2, **dadurch gekennzeichnet, dass** der Pressvorgang kontinuierlich zwischen zwei Anpresswalzen (19) ausgeführt wird, die die Druckfolie (6) gegen das Transfersubstrat (4) pressen.

4. Verfahren nach einem der vorhergehenden Ansprüche, **dadurch gekennzeichnet, dass** eine Antihaftschicht (7) zwischen der Druckfolie (6) und dem Transfersubstrat (4) angeordnet ist.

5. Verfahren nach einem der vorhergehenden Ansprüche, **dadurch gekennzeichnet, dass**, während des Pressvorgangs, die Schicht aus Vollmaterial (8) der Druckfolie (6) dem Transfersubstrat (4) zugewandt ist und die katalytische Aktivschicht (5) des Transfersubstrats (4) der Protonenaustauschmembran (3) zugewandt ist.

6. Verfahren nach einem der vorhergehenden Ansprüche, **dadurch gekennzeichnet, dass** das Pressen direkt auf der texturierten Schicht (9) der Druckfolie (6) ausgeführt wird.

7. Verfahren nach einem der vorhergehenden Ansprüche, **dadurch gekennzeichnet, dass** die texturierte Schicht (9) der Druckfolie (6) Muster umfasst, die durch in die Pressrichtung abstehende Wände (10) definiert werden.

8. Verfahren nach Anspruch 7, **dadurch gekennzeichnet, dass** die Muster der texturierten Schicht (9) regelmäßig über die gesamte Oberfläche der Druckfolie (6) verteilt sind.

9. Verfahren nach Anspruch 7, **dadurch gekennzeichnet, dass** die texturierte Schicht (9) eine Mehrzahl von verschiedenen Mustern aufweist, die verschiedene Bereiche auf der Oberfläche der Druckfolie (6) definieren.

10. Verfahren nach einem der vorhergehenden Ansprüche, **dadurch gekennzeichnet, dass** der Pressvorgang gleichzeitig das Pressen eines Verstärkungsrahmens (15) auf den Umfang der Protonenaustauschmembran (3) umfasst

11. Verfahren nach Anspruch 10, **dadurch gekennzeichnet, dass** eine Materialschicht der Druckfolie (6) aufweist: eine erste Oberfläche (17) zum Pressen des Transfersubstrats (4); und eine zweite Oberfläche (16) zum Pressen des Verstärkungsrahmens (15), wobei die zweite Oberfläche (16) auf einer Ebene gelegen ist, die verschieden von der Ebene der ersten Oberfläche (17) ist.

12. Verfahren nach einem der vorhergehenden Ansprüche, **dadurch gekennzeichnet, dass** die Druckfolie (6) während des Pressschritts zwischen zwei seitlichen Rändern (18) gehalten wird.

13. Verfahren nach einem der vorhergehenden Ansprüche, **dadurch gekennzeichnet, dass** das Transfersubstrat (4) über die Druckfolie (6) gegen eine Seite der Protonenaustauschmembran (3) gepresst wird und dass ein zweites Transfersubstrat (4), das mit einer katalytischen Aktivschicht (5) versehen ist, über eine zweite, elastisch verformbare Druckfolie (6) gegen die andere Seite der Protonenaustauschmembran (3) gepresst wird.

14. Vorrichtung zur Herstellung durch Transfer einer Aktivschichten-Membrananordnung einer Brennstoffzelle/eines Elektrolyseurs, wobei diese Vorrichtung eine elastisch verformbare Druckfolie (6) umfasst, die geeignet ist, ein Transfersubstrat (4) gegen eine Protonenaustauschmembran (3) zu pressen, wobei diese Druckfolie (6) eine Schicht aus Vollmaterial (8) und eine texturierte Schicht (9) umfasst.

15. Vorrichtung nach Anspruch 14, **dadurch gekennzeichnet, dass** sie ein Formelement (1, 2) umfasst, das an der Druckfolie (6) angeordnet ist und geeignet ist, die Druckfolie (6) gegen ein Transfersubstrat (4) zu pressen.

16. Vorrichtung nach Anspruch 15, **dadurch gekennzeichnet, dass** sie zwei Formelemente (1, 2) und zwei Druckfolien (6) umfasst, wobei jedes Formelement (1, 2) an einer der Druckfolien (6) angeordnet ist.

17. Vorrichtung nach Anspruch 14, **dadurch gekennzeichnet, dass** sie Anpresswalzen (19) umfasst, die geeignet sind, die Druckfolie (6) gegen ein Transfersubstrat (4) zu pressen.

18. Vorrichtung nach einem der Ansprüche 14 bis 17, **dadurch gekennzeichnet, dass** sie seitliche Ränder (18) umfasst, die geeignet sind, die Druckfolie (6) zwischen sich zu halten.

19. Vorrichtung nach einem der Ansprüche 14 bis 18, **dadurch gekennzeichnet, dass** die Druckfolie (6) aufweist: eine erste Oberfläche (17) zum Pressen des Transfersubstrats; und eine zweite Oberfläche (16) zum Pressen des Verstärkungsrahmens.

20. Vorrichtung nach Anspruch 19, **dadurch gekennzeichnet, dass** die zweite Oberfläche (16) auf einer Ebene gelegen ist, die verschieden von der Ebene der ersten Oberfläche (17) ist.

## Claims

1. Process for manufacturing by transfer a catalyst-coated membrane for a fuel-cell stack/electrolyser, this process comprising the following steps:
- a step of depositing a catalytic active layer (5) on a transfer substrate (4);
- a step of transferring the catalytic active layer (5) from the transfer substrate (4) to a proton exchange membrane (3) by pressing;
**characterized in that** the transferring step comprises a pressing operation in which the transfer substrate (4) is pressed against the proton exchange membrane (3) by way of an elastically deformable compression film (6) that comprises a layer of unapertured material (8) and a textured layer (9).

2. Process according to Claim 1, **characterized in that** the pressing operation is carried out using a mould element (1, 2) that presses the compression film (6) against the transfer substrate (4).

3. Process according to either of Claims 1 and 2, **characterized in that** the pressing operation is carried out continuously between two pressure rolls (19) that press the compression film (6) against the transfer substrate (4).

4. Process according to any one of the preceding claims, **characterized in that** a non-stick layer (7) is placed between the compression film (6) and the transfer substrate (4).

5. Process according to one of the preceding claims, **characterized in that**, during the pressing operation, the layer of unapertured material (8) of the compression film (6) is turned toward the transfer substrate (4) and the catalytic active layer (5) of the transfer substrate (4) is turned toward the proton exchange membrane (3).

6. Process according to one of the preceding claims, **characterized in that** the textured layer (9) of the compression film (6) is pressed directly.

7. Process according to one of the preceding claims, **characterized in that** the textured layer (9) of the compression film (6) comprises patterns defined by walls (10) that protrude in the pressing direction.

8. Process according to Claim 7, **characterized in that** the patterns of the textured layer (9) are regularly distributed over the entire surface of the compression film (6).

9. Process according to Claim 7, **characterized in that** the textured layer (9) has a plurality of different patterns defining various regions on the surface of the compression film (6).

10. Process according to any one of the preceding claims, **characterized in that** the pressing operation comprises simultaneously pressing a reinforcing frame (15) onto the perimeter of the proton exchange membrane (3).

11. Process according to Claim 10, **characterized in that** a layer of material of the compression film (6) has: a first surface (17) for pressing the transfer substrate (4); and a second surface (16) for pressing the reinforcing frame (15), the second surface (16) being located in a different plane from the plane of the first surface (17).

12. Process according to any one of the preceding claims, **characterized in that**, during the pressing step, the compression film (6) is held between two lateral edges (18).

13. Process according to any one of the preceding claims, **characterized in that** said transfer substrate (4) is pressed against one face of the proton exchange membrane (3) by way of the compression film (6), and **in that** a second transfer substrate (4) equipped with a catalytic active layer (5) is pressed against the other face of the proton exchange membrane (3) by way of a second elastically deformable compression film (6).

14. Device for manufacturing by transfer a catalyst-coated membrane for a fuel-cell stack/electrolyser, this device comprising an elastically deformable compression film (6) suitable for pressing a transfer substrate (4) against a proton exchange membrane (3), this compression film (6) comprising a layer of unapertured material (8) and a textured layer (9).

15. Device according to Claim 14, **characterized in that** it comprises a mould element (1, 2) placed against the compression film (6) and suitable for pressing the compression film (6) against a transfer substrate (4).

16. Device according to Claim 15, **characterized in that** it comprises two mould elements (1, 2) and two compression films (6), each mould element (1, 2) being placed against one of the compression films (6).

17. Device according to Claim 14, **characterized in that** it comprises pressure rolls (19) that are suitable for pressing the compression film (6) against a transfer substrate (4).

18. Device according to one of Claims 14 to 17, **characterized in that** it comprises lateral edges (18) suitable for holding therebetween the compression film (6).

19. Device according to one of Claims 14 to 18, **characterized in that** the compression film (6) has: a first surface (17) for pressing the transfer substrate; and a second surface (16) for pressing the reinforcing frame.

20. Device according to Claim 19, **characterized in that** the second surface (16) is located in a different plane from the plane of the first surface (17).
